# EUROPÄISCHE PATENTSCHRIFT

(11) **EP 2 287 416 B1**
(45) Veröffentlichungstag und Bekanntmachung des Hinweises auf die Patenterteilung: **12.10.2016**
(21) Anmeldenummer: 10006079.7
(22) Anmeldetag: 11.06.2010
(51) Int. Cl.: E04D 13/03, E06B 1/34, F16B 41/00

(54) **Wohndachfenster mit Befestigungsvorrichtung für ein Abdeckblech sowie Verfahren zur Befestigung des Abdeckblechs**
Skylight with means for fixing a cover plate and method for fixing the cover plate
Fenêtre de toit avec un dispositif de fixation pour une tôle de recouvrement et méthode de fixation pour la tôle

(30) Priorität: 14.07.2009 DE 102009033939
(43) Veröffentlichungstag der Anmeldung: 23.02.2011
(73) Patentinhaber: ROTO FRANK AG, 70771 Leinfelden-Echterdingen (DE)
(72) Erfinder: Galm, Bernd, 74736 Hardheim (DE); Wendel, Frank, 97265 Hettstadt (DE)
(74) Vertreter: Gleiss & Grosse

(56) Entgegenhaltungen:
- EP-A2- 1 355 016
- WO-A1-2009/076951
- DE-U1- 9 016 725

## Beschreibung

Die Erfindung betrifft ein Wohndachfenster mit einem Flügelrahmen der Rahmenschenkel aufweist, wobei an mindestens einem der Rahmenschenkel ein Abdeckblech mittels einer Befestigungsvorrichtung befestigt ist. Die Erfindung betrifft weiterhin ein Verfahren zum Befestigen eines Abdeckblechs an einem Rahmenschenkel eines Wohndachfensters.

Wohndachfenster der eingangs genannten Art sind aus dem Stand der Technik bekannt. Derartige Wohndachfenster weisen einen Flügelrahmen auf, an welchem eine Abdeckung in Form des Abdeckblechs vorgesehen ist. Das Abdeckblech dient zum einen dem Schutz des eigentlichen Flügelrahmens und zum anderen sorgt es für einen guten optischen Eindruck des Wohndachfensters. Das Abdeckblech besteht häufig aus einem oberflächenbehandelten, beispielsweise lackierten, Metall. Um das Abdeckblech an dem Rahmenschenkel des Flügelrahmens zu befestigen, ist die Befestigungsvorrichtung vorgesehen. Bekannt ist es, das Abdeckblech mittels Schrauben an dem Flügelrahmen zu befestigen. Die Befestigungsvorrichtung liegt demnach in Gestalt der Schraube beziehungsweise eines Bolzens vor. Eine derartige Befestigung ist jedoch unvorteilhaft, da sie zum einen zeitaufwendig ist, weil die Schraube mit dem Abdeckblech beziehungsweise dem Flügelrahmen verschraubt werden muss, und zum anderen, weil Bereiche der Befestigungsvorrichtung an dem Flügelrahmen sichtbar verbleiben können. Letzteres ist üblicherweise notwendig, um das Befestigen des Abdeckblechs und auch ein eventuell vorgesehenes Entfernen zu ermöglich. Beispielsweise verbleiben Schraubenköpfe in einem sichtbaren Bereich des Wohndachfensters.

Aus dem Stand der Technik ist beispielsweise die Druckschrift EP 1 355 016 A2 bekannt. Diese betrifft ein Dachfenster, insbesondere Wohndachfester, mit einem Blendrahmen und einem Flügelrahmen, wobei mindestens ein Abschnitt der Außenseite des Flügelrahmens mit einer Abdeckung überfangen ist. Es ist vorgesehen, dass die Abdeckung mittels mindestens einer Klipsverbindung am Flügelrahmen positioniert und/oder gehalten ist.

Weiterhin beschreibt die Druckschrift DE 90 16 725 U1 eine Abdeckung für einen an einem festen Rahmen angelenkten Flügelrahmen eines Dachfensters, dessen Scheibe durch mindestens ein Glashalteprofil am Flügelrahmen angedrückt ist, wobei jedes Glashalteprofil einem Holm des Flügelrahmens zugeordnet ist und mit einem an die Scheibenaußenfläche federelastisch angedrückten Klemmschenkel unter Zwischenschaltung eines Dichtelements den Scheibenrand übergreift, und mit mehreren, einen Abdeckrahmen bildenden Abdeckprofilen, wobei jedes Glashalteprofil formschlüssig mit dem zugeordneten Abdeckprofil gekuppelt ist. Dabei ist vorgesehen, dass der Klemmschenkel nahe seinem inneren Längsrand eine gegen die Scheibenmitte hin randoffene Einstecknut aufweist, in die ein hakenförmiger Längsrand eingreift, welcher an einem im wesentlichen parallel zum Klemmschenkel des Glashalteprofils angeordneten inneren Steg des Abdeckprofils angebracht ist, und dass der innere Steg den Klemmschenkel überdeckt.

Schießlich beschreibt die Druckschrift WO 2009/076951 A1 ein durch eine Ausnehmung eines Wetterschutzes einbringbares Befestigungselement, welches zur Befestigung des Wetterschutzes an einem Rahmenprofil oder einem Fensterrahmen vorgesehen ist.

Es ist somit Aufgabe der Erfindung, ein Wohndachfenster bereitzustellen, welches die eingangs genannten Nachteile nicht aufweist und insbesondere eine schnelle Montage des Abdeckblechs an dem Rahmenschenkel erlaubt. Weiterhin soll die Befestigung mittels der Befestigungsvorrichtung derart erfolgen, dass diese nicht sichtbar an dem Wohndachfenster verbleibt.

Dies wird erfindungsgemäß erreicht, indem die Befestigungsvorrichtung mindestens ein Stützelement und mindestens ein damit zusammenwirkendes Gegenstützelement zur axial unverschieblichen Abstützung des Abdeckblechs am Rahmenschenkel und mindestens ein Hintergriffelement sowie ein damit zusammenwirkendes Hintergriffgegenelement zur Abhebeverhinderung des Abdeckblechs vom Rahmenschenkel aufweist, wobei das Hintergriffelement ein für sich verschiebbar gelagerter, manuell zu bedienender Sicherungsstift ist. Die Befestigungsvorrichtung sieht also jeweils mindestens ein Stützelement, Gegenstützelement, Hintergriffelement und Hintergriffgegenelement vor. Dabei wirkt das Stützelement mit dem mindestens einen Gegenstützelement und das Hintergriffelement mit dem mindestens einen Hintergriffgegenelement zusammen. Das Stützelement sorgt zusammen mit dem Gegenstützelement dafür, dass das Abdeckblech mit dem Rahmenschenkel derart gehalten ist, dass es axial zumindest in eine Richtung unverschieblich beziehungsweise abgestützt ist. Stützelement und Gegenstützelement bilden somit im Wesentlichen einen Endanschlag für das Abdeckblech in diese Richtung. Zu diesem Zweck sind Stützelement und Gegenstützelement beispielsweise ineinandersteckbar. Die Richtung ist vorzugsweise die Längsrichtung des Abdeckblechs beziehungsweise des Rahmenschenkels. Zusätzlich kann jedoch auch ein Abstützen in weitere Richtungen vorgesehen sein.

Dagegen sorgt das Hintergriffelement zusammen mit dem mindestens einem Hintergriffgegenelement dafür, dass das Abdeckblech nicht von dem Rahmenschenkel abgehoben werden kann. Sobald sich das Hintergriffelement in einer Sicherungsstellung befindet, ist das Abdeckblech sicher an dem Rahmenschenkel beziehungsweise dem Flügelrahmen gehalten. Das Hintergriffelement ist als Sicherungsstift ausgebildet, welcher verschiebbar gelagert ist und manuell betätigt werden kann. Solange sich der Sicherungsstift beziehungsweise das Hintergriffelement nicht in seiner Sicherungsstellung befindet, kann die Verbindung zwischen Stützelement und Gegenstützelement gelöst werden (beispielsweise durch Ausstecken), sodass die axial unverschiebliche Abstützung des Abdeckblechs am Rahmenschenkel nicht mehr vorliegt. Es kann vorgesehen sein, dass das Hintergriffgegenelement gleichzeitig auch das Gegenstützelement darstellt beziehungsweise dieses mit ausbildet, also ein Teil davon ist. Umgekehrt kann auch das Gegenstützelement das Hintergriffgegenelement ausbilden beziehungsweise ein Teil davon sein.

Der Sicherungsstift kann zwischen der Sicherungsstellung und einer Abhebestellung verschoben werden. In der Abhebestellung liegt keine Hintergriffverbindung zwischen dem Hintergriffelement beziehungsweise dem Sicherungsstift und dem Hintergriffgegenelement vor, das Abdeckblech kann also von dem Rahmenschenkel abgehoben werden. Dagegen liegt in der Sicherungsstellung die Hintergriffverbindung, also eine formschlüssige Verbindung, vor, sodass das Abdeckblech an dem Rahmenschenkel gehalten ist. Steht das Stützelement auf diese Weise in Wirkverbindung mit dem Gegenstützelement und das Hintergriffelement mit dem Hintergriffgegenelement, so liegt eine Montageposition des Abdeckblechs an dem Rahmenschenkel vor. In dieser ist das Abdeckblech sicher an dem Rahmenschenkel beziehungsweise dem Flügelrahmen des Wohndachfensters gehalten, sodass ein unbeabsichtigtes Entfernen des Abdeckblechs von diesem nicht möglich ist. Der Sicherungsstift ist für sich verschiebbar, das heißt, er kann in Bezug zu dem Abdeckblech bewegt werden.

Weitere vorteilhafte Ausgestaltungen ergeben sich aus den Unteransprüchen.

Eine Weiterbildung der Erfindung sieht vor, dass die Befestigungsvorrichtung Mittel zur radial unverschieblichen Abstützung des Abdeckblechs am Rahmenschenkel aufweist. Radial unverschieblich bedeutet insbesondere, dass das Abdeckblech nicht in lateraler Richtung in Bezug auf den Rahmenschenkel bewegt werden kann, also in dieser Richtung festgesetzt ist. Das Abdeckblech ist also auch in Querrichtung des Rahmenschenkels an diesem gehalten. Die radiale Abstützung des Abdeckblechs kann durch Stützelement und Gegenstützelement und/oder Hintergriffelement und Hintergriffgegenelement realisiert sein. Es kann jedoch auch ein separates Mittel zu diesem Zweck vorgesehen sein. In der Montageposition des Abdeckblechs ist dieses somit sowohl in axialer als auch in radialer Richtung unverschieblich an dem Rahmenschenkel des Flügelrahmens gehalten. Da sich der Sicherungsstift in seiner Sicherungsstellung befindet, ist es zusätzlich gegen Abheben gesichert und somit an dem Rahmenschenkel des Flügelrahmens sicher befestigt.

Nach einer Weiterbildung der Erfindung ist vorgesehen, dass dem Sicherungsstift eine ihn in seiner Sicherungsstellung lösbar haltende Rastvorrichtung zugeordnet ist. Wird der Sicherungsstift - insbesondere aus seiner Abhebestellung - in seine Sicherungsstellung verlagert, so verhindert die Rastvorrichtung, dass er unbeabsichtigt wieder aus dieser herausgelangen kann. Die Rastvorrichtung ist dabei zum lösbaren Halten vorgesehen. Das bedeutet, dass der in seine Sicherungsstellung verschobene Sicherungsstift lediglich durch eine manuelle Krafteinwirkung wieder aus der Sicherungsstellung herausgelangen kann. Ein Verschieben des Sicherungsstiftes unter Lösen der durch die Rastvorrichtung vorliegenden Verbindung ist beispielsweise vorgesehen, wenn das Abdeckblech von dem Rahmenschenkel entfernt werden soll (zum Beispiel zum Austausch/zur Reparatur des Abdeckblechs).

Eine vorteilhafte Weiterbildung der Erfindung sieht vor, dass der Sicherungsstift in einem Lagerelement verschieblich geführt ist. Die Lagerung des verschiebbar gelagerten Sicherungsstiftes wird mit dem Lagerelement realisiert. Dabei ist insbesondere eine axiale Lagerung des Sicherungsstifts vorgesehen. Der Sicherungsstift kann derart in dem Lagerelement verschoben werden, dass er manuell zumindest in seine Sicherungsstellung bringbar ist.

Eine weitere Ausgestaltung der Erfindung sieht vor, dass der Sicherungsstift an dem Lagerelement mittels einer Rastverbindung unverlierbar gehalten ist. Die Rastverbindung verhindert, dass der Sicherungsstift aus dem Lagerelement hinausgelangen kann. Die Rastverbindung kann dabei lösbar sein, das bedeutet, dass der Sicherungsstift manuell aus dem Lagerelement entnommen werden kann, jedoch ein unbeabsichtigtes Herausgelangen - also Verlieren - verhindert ist. Die Rastverbindung wirkt insbesondere derart, dass der Sicherungsstift aus seiner Abhebestellung nicht aus dem Lagerelement herausgelangen kann.

Bevorzugt ist dabei die Rastverbindung ein Herausziehschutz. Sie ist somit zur Verhinderung eines Herausziehens und/oder Herausfallens des Sicherungsstiftes aus dem Lagerelement ausgebildet. Ein unbeabsichtigtes Herausziehen/Herausfallen ist damit verhindert. Lediglich bei einer (manuellen) Betätigung der Rastverbindung ist ein Herausnehmen des Sicherungsstiftes aus dem Lagerelement möglich. Vorteilhafterweise ist die Rastverbindung derart ausgebildet, dass ein Verrasten des Sicherungsstifts an dem Lagerelement vorgesehen ist, sobald der Sicherungsstift in das Lagerelement eingeschoben wird.

In einer bevorzugten Weiterbildung ist vorgesehen, dass die Rastverbindung eine Rastnase am Sicherungsstift aufweist, die mit einer vom Sicherungsstift durchsetzten Führungsöffnung des Lagerelements zusammenwirkt. Die Rastnase ist das verrastende Element der Rastverbindung. Bei einem Herstellen der Rastverbindung rastet also die Rastnase derart ein, dass der Sicherungsstift an dem Lagerelement unverlierbar gehalten ist. Dabei wirkt die Rastnase mit der Führungsöffnung zusammen, die in dem Lagerelement vorgesehen und von dem Sicherungsstift durchsetzt ist. Das verschiebliche Führen des Sicherungsstifts in dem Lagerelement wird von der Führungsöffnung realisiert. Der Führungsstift ist dabei in dieser angeordnet. Die Führungsöffnung erlaubt also ein Verschieben des Sicherungsstiftes zumindest in seine Sicherungsstellung. Der Sicherungsstift ist so in der Führungsordnung angeordnet, dass die Rastnase ein Herausbewegen aus der Führungsöffnung beziehungsweise dem Lagerelement nicht zulässt. Die Rastnase greift dabei an einem Rand der Führungsöffnung an.

Eine Weiterbildung der Erfindung sieht vor, dass die Rastvorrichtung einen Rastvorsprung am Sicherungsstift aufweist, der mit der Führungsöffnung oder einer vom Sicherungsstift durchsetzten weiteren Führungsöffnung des Lagerelements zusammenwirkt. Zusätzlich oder alternativ zu der Rastnase weist der Sicherungsstift somit den Rastvorsprung auf. Dieser kann mit derselben Führungsöffnung wie die Rastnase oder mit einer weiteren Führungsöffnung des Lagerelements zusammenwirken, um den Sicherungsstift in seiner Sicherungsstellung lösbar zu halten. Der Rastvorsprung greift dabei beispielsweise an dem Rand der Führungsöffnung oder der weiteren Führungsöffnung an. Zusammen mit dem Rastvorsprung weist der Sicherungsstift also größere Abmessungen auf als die Führungsöffnung. Dies ist in mindestens einer Erstreckungsrichtung des Sicherungsstifts vorgesehen. Der Rastvorsprung übergreift dabei die Führungsöffnung oder die weitere Führungsöffnung, sodass ein unbeabsichtigtes Herausbewegen des Sicherungsstiftes aus dem Lagerelement, das heißt ein Herausbewegen aus der Sicherungsstellung, nicht möglich ist. Lediglich durch Aufbringen einer gewissen Kraft, insbesondere durch manuellen Einfluss, kann der Sicherungsstift unter Lösen der Rastverbindung zwischen Rastvorsprung und Führungsöffnung aus seiner Sicherungsstellung herausbewegt werden.

Nach einer vorteilhaften Weiterbildung der Erfindung ist der Rastvorsprung an einer Federbrücke vorgesehen. Die Federbrücke ist eine brückenartige Ausbildung an dem Sicherungsstift. Sie weist eine Federwirkung auf, die ein Zurückweichen des Rastvorsprungs erlaubt. Gleichzeitig drängt sie den Rastvorsprung in seine Raststellung, also in eine Stellung, in welcher der Sicherungsstift in seiner Sicherungsstellung gehalten ist. Die Federbrücke ist an ihren Enden mit dem Sicherungsstift verbunden. Der zwischen den Enden ausgebildete Bereich ist von restlichen Bereichen des Sicherungsstiftes beabstandet. Der Querschnitt der Federbrücke ist im Wesentlichen rechteckig, wobei er derart gewählt ist, um eine ausreichende Federwirkung auf den Rastvorsprung auszuüben. Die Federbrücke kann zum Ausüben der Federkraft beziehungsweise zum Erreichen einer gewissen Biegesteifigkeit nach außen gewölbt sein, wobei die Wölbung entgegen einer Kraft ausgebildet ist, die auf ein Herausbewegen der Rastvorrichtung aus ihrer Rastposition gerichtet ist. Zwischen der Federbrücke und dem restlichen Bereich des Sicherungsstifts ist demnach ein Freiraum vorgesehen.

Eine bevorzugte Weiterbildung sieht vor, dass Rastnase und Rastvorsprung einstückig mit dem Sicherungsstift ausgebildet sind. Rastnase und Rastvorsprung sind derart an dem Sicherungsstift vorgesehen, dass lediglich ein Bauteil vorliegt. Insbesondere sind Rastnase und Rastvorsprung dabei materialeinheitlich zu dem Sicherungsstift. Rastnase und Rastvorsprung können bei der Herstellung des Sicherungsstiftes mit ausgebildet sein. Die Herstellung kann beispielsweise mittels eines Spritzgießverfahrens erfolgen. Sind Rastnase und/oder Rastvorsprung auf der Federbrücke angeordnet, so ist auch die Federbrücke einstückig mit dem Sicherungsstift ausgebildet.

Bevorzugt ist vorgesehen, dass der Sicherungsstift dem Abdeckblech und das Hintergriffgegenelement dem Rahmenschenkel zugeordnet ist. Ebenso kann vorgesehen sein, dass das Stützelement dem Abdeckblech und das Gegenstützelement dem Rahmenschenkel zugeordnet ist.

In einer bevorzugten Weiterbildung der Erfindung ist das Stützelement dem Abdeckblech und das Gegenstützelement dem Rahmenschenkel zugeordnet. Alternativ können selbstverständlich Sicherungsstift und/oder Stützelement auch dem Rahmenschenkel und Hintergriffgegenelement und/oder Gegenstützelement dem Abdeckblech zugeordnet sein.

Eine Weiterbildung der Erfindung sieht vor, dass das Stützelement als Einfahrtasche ausgebildet ist. Das Stützelement ist demnach taschenförmig mit einem Einschub zum Einschieben des Gegenstützelements vorgesehen. Taschenförmig bedeutet, dass eine Ausnehmung zur Aufnahme des Gegenstützelements das Stützelement nicht vollständig durchgreift, sondern eine Sacköffnung vorliegt. Die Einfahrtasche weist eine Form dergestalt auf, dass das Gegenstützelement nach einem Einbringen in die Einfahrtasche zumindest axial unverschieblich abgestützt ist. Zusätzlich kann auch eine radiale Lagerung des Gegenstützelements vorgesehen sein. Das Stützelement weist dabei eine Sackausnehmung auf, die vorteilhafterweise im Wesentlichen rechteckigen Querschnitt hat.

Eine weitere Ausgestaltung der Erfindung sieht vor, dass eine Taschenwand der Einfahrtasche zumindest bereichsweise von dem Abdeckblech gebildet ist. Ist das Stützelement an dem Abdeckelement angebracht - beispielsweise mittels einer Nietverbindung -, so kann es vorgesehen sein, dass das Abdeckblech die Taschenwand der Einfahrtasche zumindest bereichsweise ausbildet. Das Abdeckblech bildet also eine Anlagefläche für das Gegenstützelement. In diesem Fall bildet das Stützelement zusammen mit dem Abdeckblech die Einfahrtasche. Es ist also nicht notwendig, dass das Stützelement zum vollständigen Umgreifen des Gegenstützelements ausgestaltet ist.

Zweckmäßigerweise ist vorgesehen, dass das Stützelement das Gegenstützelement radial unverschieblich hält. Zu diesem Zweck kann es das Gegenstützelement zumindest bereichsweise umfassen beziehungsweise umgreifen. Das Gegenstützelement wirkt also mit dem Stützelement zusammen, um sowohl das Abdeckblech axial unverschieblich abzustützen, als auch radial unverschieblich zu halten.

In einer bevorzugten Weiterbildung weist das Gegenstützelement mindestens einen sich im Wesentlichen parallel zu dem Abstützblech erstreckenden Flügel auf. Die Flügel werden von Vorsprüngen gebildet, welche sich beispielsweise ausgehend von dem Regelgegenstützelement radial beziehungsweise in lateraler Richtung nach außen erstrecken. Die Flügel können dazu vorgesehen sein, das Gegenstützelement in dem Stützelement zu halten. Es ist also nicht notwendig, dass das Gegenstützelement vollständig in das Stützelement eingreift, dies kann lediglich im Bereich der Flügel vorgesehen sein. Die Flügel erstrecken sich dabei im Wesentlichen parallel zu dem Abstützblech, wobei ein Winkelversatz in Grenzen zulässig ist.

Nach einer vorteilhaften Weiterbildung der Erfindung weist die Einfahrtasche mindestens einen Hintergriffbereich auf, in welchen der Flügel des Gegenstützelements eingreift. Demnach ist vorgesehen, dass der Flügel mit dem Hintergriffbereich zusammenwirkt, um das Abdeckblech am Rahmenschenkel axial unverschieblich abzustützen. Sind mehrere Flügel vorgesehen, so kann gleichzeitig auch ein Verkippen des Abdeckblechs - insbesondere um eine Längsachse - in Bezug zu dem Rahmenschenkel verhindert werden.

Eine vorteilhafte Ausgestaltung der Erfindung sieht vor, dass das Stützelement und das Hintergriffelement beabstandet zueinander angeordnet sind. Damit liegen auch das Gegenstützelement und das Hintergriffgegenelement zueinander beabstandet vor. Durch die beabstandete Anordnung kann eine optimale Haltewirkung des Abdeckblechs an dem Rahmenschenkel gewährleistet werden. Insbesondere wird ein Verdrehen beziehungsweise Verkippen des Abdeckblechs gegenüber dem Rahmenschenkel verhindert. Auf diese Weise kann eine stabile und dauerhafte Verbindung zwischen Abdeckblech und Rahmenschenkel gewährleistet werden.

Die Erfindung betrifft ferner ein Verfahren zum Befestigen eines Abdeckblechs an einem Rahmenschenkel eines Flügelrahmens eines Wohndachfensters, insbesondere gemäß den vorstehenden Ausführungen, wobei das Abdeckblech an dem Rahmenschenkel mittels einer Befestigungsvorrichtung befestigt wird. Dabei ist vorgesehen, dass ein Stützelement der Befestigungsvorrichtung mit einem Gegenstützelement der Befestigungsvorrichtung in Eingriff gebracht wird, sodass das Abdeckblech axial unverschieblich an dem Rahmenschenkel abgestützt ist und anschließend ein als Sicherungsstift ausgebildetes Hintergriffelement betätigt wird, sodass das Hintergriffelement zur Abhebeverhinderung des Abdeckblechs vom Rahmenschenkel mit einem Hintergriffgegenelement zusammenwirkt. Zum Befestigen des Abdeckblechs an dem Rahmenschenkel sind demnach zwei Arbeitsschritte notwendig. Zum einen muss das Stützelement mit dem Gegenstützelement in Eingriff gebracht werden. Dies erfolgt beispielsweise durch Einschieben des Gegenstützelements in das Stützelement in axialer Richtung des Rahmenschenkels. Durch das Zusammenwirken des Gegenstützelements mit dem Stützelement ist das Abdeckblech axial unverschieblich an dem Rahmenschenkel abgestützt. Zusätzlich kann auch eine Abstützung in radialer Richtung beziehungsweise lateraler Richtung vorgesehen sein. Nach dem In-Eingriff-Bringen des Gegenstützelements mit dem Stützelement wird der Sicherungsstift betätigt, sodass dieser in ein Hintergriffgegenelement eingreift. Dies verhindert ein Abheben des Abdeckblechs von dem Rahmenschenkel. Durch das Verhindern des Abhebens kann ebenso das Stützelement nicht mehr aus dem Gegenstützelement ausgebracht werden, sodass eine dauerhafte Verbindung des Abdeckblechs mit dem Rahmenschenkel beziehungsweise dem Flügelrahmen hergestellt ist.

Die Erfindung wird im Folgenden anhand der in der Zeichnung dargestellten Ausführungsbeispiele näher erläutert, ohne dass eine Beschränkung der Erfindung erfolgt. Es zeigen:
- Figur 1: einen Ausschnitt eines Wohndachfensters mit einem Rahmenschenkel aufweisenden Flügelrahmen,
- Figur 2: zwei aneinander befestigte Abdeckbleche zur Befestigung an dem Rahmenschenkel, wobei die beiden Abdeckbleche mittels eines Montageteils aneinander befestigt sind und zur Befestigung an dem Rahmenschenkel ein Stützelement vorgesehen ist,
- Figur 3: das Montageteil, wobei an diesem ein als Sicherungsstift ausgebildetes Hintergriffgegenelement vorgesehen ist,
- Figur 4: das Montageteil aus Figur 3 in einer Seitenansicht,
- Figur 5: der Sicherungsstift,
- Figur 6: das aus Figur 2 bekannte Stützelement, und
- Figur 7: das Stützelement in einer weiteren Ansicht.

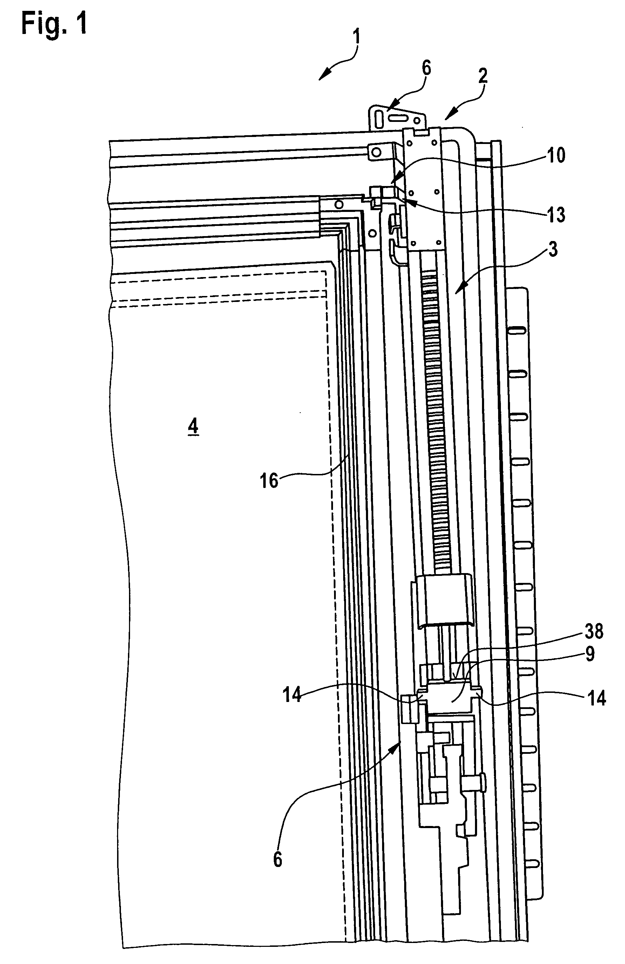

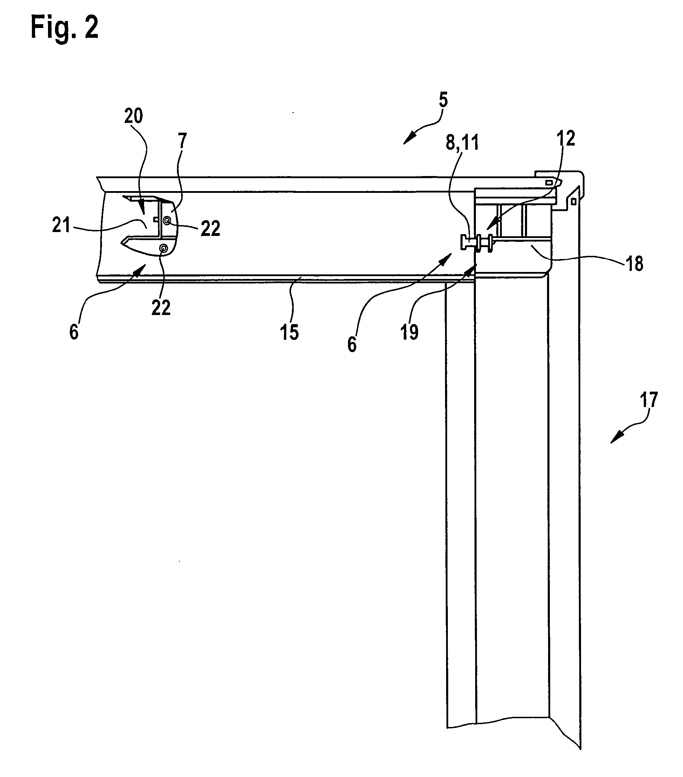

Die Figur 1 zeigt einen Bereich eines Wohndachfensters 1, welches einen Flügelrahmen 2 mit Rahmenschenkeln 3 aufweist. Zwischen den Rahmenschenkeln 3 beziehungsweise an dem Flügelrahmen 2 ist eine Verglasung 4 vorgesehen. An dem Rahmenschenkel 3 soll ein in Figur 2 dargestelltes Abdeckblech 5 befestigt werden. Zu diesem Zweck ist eine Befestigungsvorrichtung 6 vorgesehen, welche an dem Abdeckblech 5 ein Stützelement 7 und ein Hintergriffelement 8 und an dem Rahmenschenkel 3 ein Gegenstützelement 9 sowie ein Hintergriffgegenelement 10 vorsieht. Das Hintergriffelement 8 ist dabei als Sicherungsstift 11 ausgebildet. Im Bereich des Hintergriffelements 8 ist an dem Abdeckblech 5 ein weiteres Stützelement 12 und im Bereich des Hintergriffgegenelements 10 an dem Rahmenschenkel 3 ein weiteres Gegenstützelement 13 vorgesehen. Das weitere Gegenstützelement 13 wird dabei von dem Hintergriffgegenelement 10 mit ausgebildet.

Bei einer Befestigung des Abdeckblechs 5 an dem Rahmenschenkel 3 ist vorgesehen, dass das Stützelement 7 mit dem Gegenstützelement 9 und das weitere Stützelement 12 mit dem weiteren Gegenstützelement 13 zusammenwirken, um das Abdeckblech 5 axial unverschieblich an dem Rahmenschenkel 3 zu halten. Gleichzeitig wird eine Verschiebung des Abdeckblechs 5 in radialer beziehungsweise lateraler Richtung verhindert. Steht also das Stützelement 7 in Eingriff mit dem Gegenstützelement 9 und das weitere Stützelement 12 mit dem weiteren Gegenstützelement 13, so ist lediglich ein Abheben des Abdeckblechs 5 von dem Rahmenschenkel 3 möglich, da sowohl ein Verschieben in axialer als auch in lateraler Richtung nicht möglich ist. Um das Abheben zu verhindern, ist der Sicherungsstift 11 vorgesehen, welcher in Bezug auf das Abdeckblech 5 verschiebbar gelagert ist und manuell betätigt werden kann. Um das Abheben zu verhindern, wird der Sicherungsstift 11 betätigt, sodass dieser in seiner Sicherungsstellung vorliegt.

Das Anbringen des Abdeckblechs 5 an dem Rahmenschenkel 3 erfolgt wie nachfolgend beschrieben: Zunächst wird das Abdeckblech 5 auf den Rahmenschenkel 3 aufgelegt, sodass das Stützelement 7 im Bereich des Gegenstützelements 9 angeordnet ist und auf dieses aufgeschoben werden kann. Anschließend wird das Abdeckblech 5 in axialer Richtung verschoben, bis das Gegenstützelement 9 beziehungsweise Flügel 14 des Gegenstützelements 9 in das Stützelement 7 eingreifen. Sind die Flügel 14 vollständig in das Stützelement 7 eingebracht, so liegt das Abdeckblech 5 an dem Rahmenschenkel 3 an. Nachfolgend wird der Sicherungsstift 11 betätigt, das heißt in seiner axialen Richtung in Bezug zu dem Abdeckblech 5 verschoben, sodass eine Hintergriffverbindung des Sicherungsstiftes 11 mit dem Hintergriffgegenelement 10 hergestellt ist. Das Hintergriffgegenelement 10 kann dabei beispielsweise U-förmig ausgebildet sein, den Sicherungsstift also zumindest bereichsweise umschließen.

Das Abdeckblech 5 kann dergestalt vorgesehen sein, dass eine Sicke 15 einen Vorsprung 16 des Flügelrahmens 2 derart aufnimmt, um eine zusätzliche Führung des Abdeckblechs 5 beim Aufschieben auf den Rahmenschenkel 3 zu realisieren. Zusätzlich dient das Eingreifen des Vorsprungs 16 in die Sicke 15 dem Erzielen eines guten optischen Eindrucks des Wohndachfensters 1.

Wie in Figur 2 erkennbar, ist an dem Abdeckblech 5 ein weiteres Abdeckblech 17 mittels eines Montageteils 18 angebracht. Das Montageteil 18 weist auch den Sicherungsstift 11 auf beziehungsweise ein Lagerelement 19, in welchem der Sicherungsstift 11 verschieblich geführt ist. Der Sicherungsstift 11 und das Stützelement 7 sind demnach dem Abdeckblech 5 und das Hintergriffgegenelement 10 und die Gegenstützelement 9 und 13 dem Rahmenschenkel 3 zugeordnet.

Das Stützelement 7 ist als Einfahrtasche 20 ausgebildet. Das bedeutet, dass das Gegenstützelement 9 in die Einfahrtasche 20 eingebracht werden kann, diese aber zumindest einseitig eine Abstützung aufweist, an welcher sich das Gegenstützelement 9 abstützen kann, sodass die axial unverschiebliche Abstützung des Abdeckblechs 5 an dem Rahmenschenkel 3 gewährleistet ist. Ein Innenbereich der Einfahrtasche 20 wird von einer Taschenwand 21 begrenzt. Wie in Figur 2 ersichtlich, wird diese zumindest bereichsweise von dem Abdeckblech 5 gebildet.

Das Stützelement 7 ist von dem weiteren Stützelement 12 beziehungsweise dem Sicherungsstift 11 beabstandet angeordnet. Damit ist auch das Gegenstützelement 9 beabstandet von dem weiteren Gegenstützelement 13 sowie dem Hintergriffgegenelement 10. Auf diese Weise wird ein Verkippen beziehungsweise Verdrehen des Abdeckblechs 5 gegenüber dem Rahmenschenkel 3 wirkungsvoll verhindert, da durch die Beabstandung eine Hebelwirkung vorliegt. Dies gewährleistet eine stabile Verbindung zwischen Abdeckblech 5 und Rahmenschenkel 3 beziehungsweise Flügelrahmen 2.

Das Stützelement 7 ist mittels mindestens einer Niete 22 an dem Abdeckblech 5 befestigt. Zwischen Montageteil 18 und dem Abdeckblech 5 sowie dem weiteren Abdeckblech 17 liegt beispielsweise eine Rastverbindung vor. Auch hier kann jedoch alternativ eine Nietverbindung vorgesehen sein. In den Figuren 1 und 2 ist nicht dargestellt, dass ein zusätzliches Abdeckblech mittels eines weiteren Montageteils an dem weiteren Abdeckblech 17 befestigt sein kann, sodass ein U-förmiges Abdeckelement vorliegt, welches jeweils beidseitig über einen Sicherungsstift 11, ein Stützelement 7 sowie ein weiteres Stützelement 12 verfügt. Das Abdeckblech 5, das weitere Abdeckblech 17 sowie das zusätzliche Abdeckblech werden in Form des Abdeckelements gemeinsam an dem Flügelrahmen 2 befestigt und mittels der Befestigungsvorrichtung 6 festgelegt.

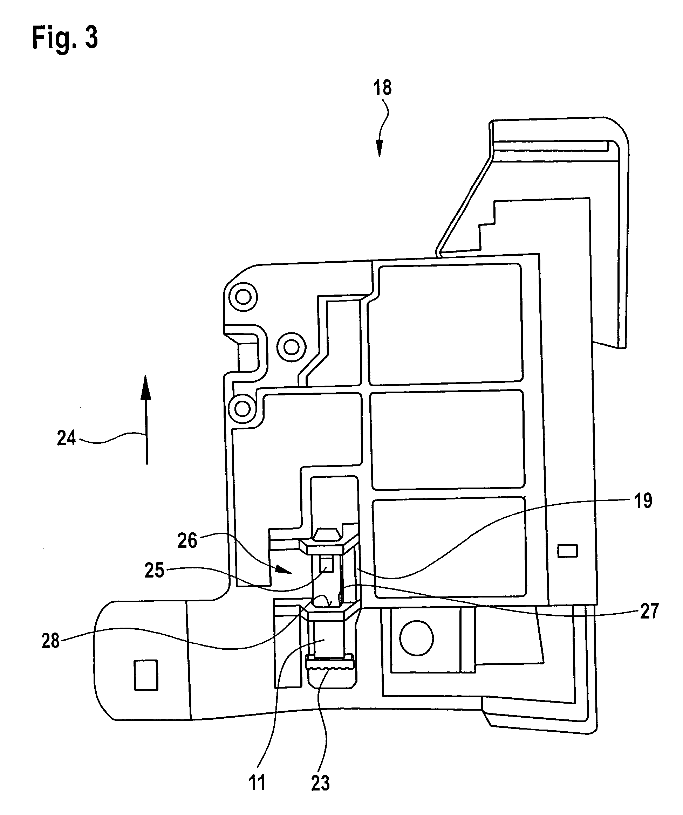

Die Figur 3 zeigt eine vergrößerte Ansicht des freigestellten Montageteils 18. Erkennbar ist, dass der Sicherungsstift 11 in dem Lagerelement 19 angeordnet ist. Der Sicherungsstift 11 verfügt über einen Betätigungsbereich 23, an welchem ein Monteur zum Verlagern des Sicherungsstiftes 11 in seine Sicherungsstellung angreift. Die Figur 3 zeigt den Sicherungsstift 11 in seiner Abhebestellung. Das bedeutet, dass in dieser Stellung das Abdeckblech 5 von dem Rahmenschenkel 3 abgehoben werden kann. Zum Verlagern in die Sicherungsstellung wird der Sicherungsstift 11 in Richtung des Pfeils 24 bewegt. In der Figur 3 ist angedeutet, dass der Sicherungsstift 11 über eine Rastnase 25 verfügt, welcher Teil einer Rastverbindung 26 ist. Die Rastverbindung 26 stellt einen Herausziehschutz dar, verhindert also ein Herausziehen des Sicherungsstiftes 11 aus dem Lagerelement 19, ausgehend von der dargestellten Position. Zu diesem Zweck wirkt die Rastnase 25 beziehungsweise die Rastverbindung 26 mit einer Führungsöffnung 27 des Lagerelements 19 zusammen. Die Führungsöffnung 27 ist von dem Sicherungsstift 11 durchsetzt, bildet also eine Lagerung für den Sicherungsstift 11 zumindest bereichsweise aus. Dabei wirkt die Rastnase 25 mit einem Rand 28 der Führungsöffnung 27 zusammen, um die Rastverbindung zwischen Sicherungsstift 11 und Lagerelement 19 herzustellen.

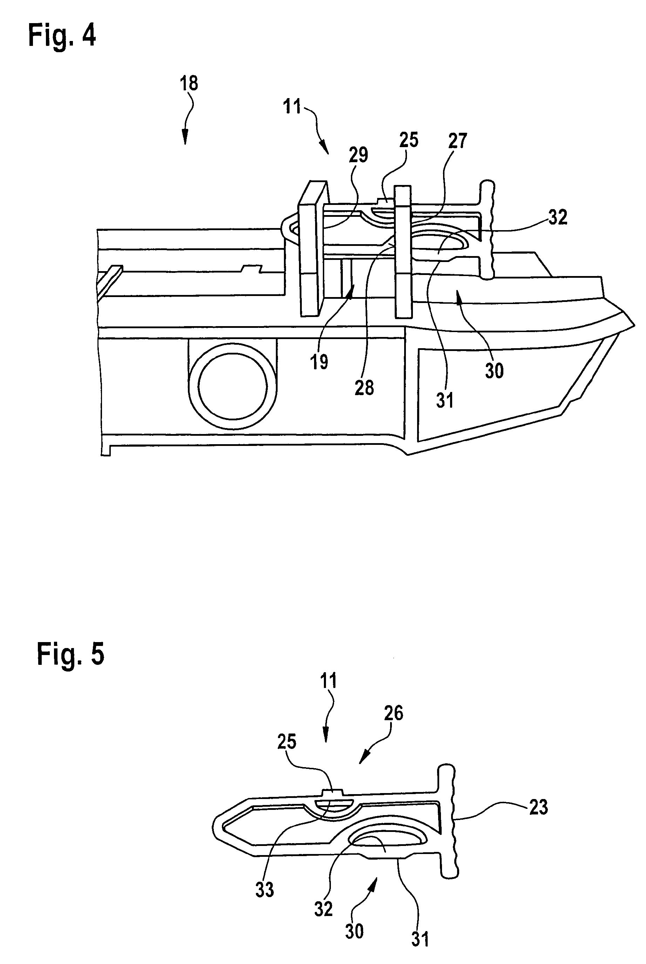

Die Figur 4 zeigt einen Bereich des Montageteils 18 in einer Seitenansicht. Es ist erkennbar, dass das Lagerelement 19 die Führungsöffnung 27 sowie eine weitere Führungsöffnung 29 aufweist. Gut erkennbar ist ebenfalls, wie die Rastnase 25 mit dem Rand 28 zusammenwirkt, um ein Herausziehen des Sicherungsstiftes 11 aus dem Lagerelement 19 zu verhindern. Der Sicherungsstift 11 weist neben der Rastverbindung 26 eine Rastvorrichtung 30 auf. Diese verfügt über einen Rastvorsprung 31, welcher auf einer Federbrücke 32 angeordnet ist. Der Rastvorsprung 31 verhindert sowohl ein unbeabsichtigtes Einbringen des Sicherungsstiftes 11 in das Lagerelement 19, also ein Verschieben des Sicherungsstiftes 11 in seine Sicherungsstellung. Andererseits verhindert es, sobald sich der Sicherungsstift 11 in seiner Sicherungsstellung befindet, ein Herausbewegen aus dieser. Der Sicherungsstift 11 kann also nicht unbeabsichtigt aus seiner Sicherungsstellung herausbewegt werden. Die Federbrücke 31 ist im Querschnitt des Sicherungsstiftes 11 gesehen nach außen gewölbt, womit eine gute Federwirkung erzielt wird. Die Federkraft der Federbrücke 32 drängt den Rastvorsprung 31 des Sicherungsstiftes 11 in seine Rastposition, also in eine Position, in welcher sowohl ein unbeabsichtigtes Einbringen als auch Ausbringen aus der Sicherungsstellung verhindert ist.

Die Figur 5 zeigt den freigestellten Sicherungsstift 11. Erkennbar ist die Rastverbindung 26 und die Rastvorrichtung 30 sowie der Betätigungsbereich 23. Die Rastverbindung 26 weist die Rastnase 25 auf, während die Rastvorrichtung 30 über den Rastvorsprung 31 auf der Federbrücke 32 verfügt. Der Vollständigkeit halber sei erwähnt, dass sich die Rastnase 25 der Rastverbindung 26 auf einer weiteren Federbrücke 33 befindet. Diese ist jedoch im Vergleich zu der Federbrücke 32 klein, sodass ihre Federwirkung gering ist. Dies rührt daher, dass die weitere Federbrücke 33 lediglich benötigt wird, um bei einem Einbringen des Sicherungsstiftes 11 in das Lagerelement 19 die Rastnase 25 zurückweichen zu lassen. Ein Ausbringen des Sicherungsstiftes 11 aus dem Lagerelement 19 ist üblicherweise nicht vorgesehen.

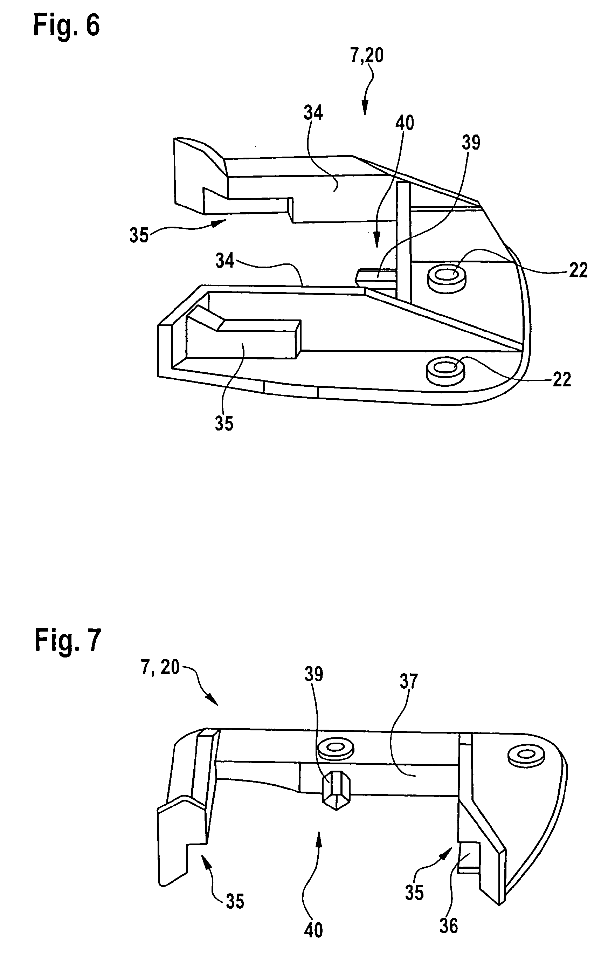

Die Figur 6 zeigt eine Ansicht des Stützelements 7. Dieses ist als Einfahrtasche 20 ausgebildet. Das Stützelement 7 ist mittels Nieten 22 an dem Abdeckblech 5 befestigt. In der Einfahrtasche 20 sind in seitlichen Taschenwänden 34 Hintergriffbereiche 35 ausgebildet, in welchen die Flügel 14 des Gegenstützelements 9 eingreifen können. Im Wesentlichen ist also das Gegenstützelement in der Montageposition des Abdeckblechs 5 in dem Stützelement angeordnet, wobei die Flügel 14 in die Hintergriffbereiche 35 eingreifen. Wie besser in der Figur 7 erkennbar, können die Hintergriffbereiche 35 in Richtung des Abdeckblechs 5 entweder geöffnet oder geschlossen sein. In ersterem Fall bildet ein Bereich des Abdeckblechs 5 eine Anlagefläche für das Gegenstützelement 9 beziehungsweise dessen Flügel 14. Im letzteren Fall ist eine Anlageschiene 36 vorgesehen, welche den Hintergriffbereich 35 in Richtung des Abdeckblechs 5 begrenzt. Eine hintere Taschenwand 37 bildet eine Anlagefläche für eine Vorderkante 38 des Gegenstützelements 9 (siehe Figur 1). Die Vorderkante 38 tritt gegen die hintere Taschenwand 37, sobald das Abdeckblech 5 in seiner Montageposition vorliegt. Auf diese Weise ist die axiale Abstützung des Abdeckblechs 5 realisiert.

An der hinteren Taschenwand 37 ist außerdem ein Zapfen 39 vorgesehen, der die Funktion eines Niederhalters 40 erfüllt. Der Zapfen 39 ist in seinem vorderen Bereich angeschrägt, sodass das Gegenstützelement 9 bei einem Einschieben in die Einfahrtasche 20 auf den Zapfen 39 aufläuft. Das Gegenstützelement wird dabei von dem Zapfen 39 von dem Abdeckblech 5 weggedrängt. Somit wird das Gegenstützelement 9 gegen eine obere Begrenzung der Hintergriffbereiche 35 gedrängt und somit fest in diesen gehalten. In der Montageposition des Abdeckblechs 5 stößt die Vorderkante 38 des Gegenstützelements 9 an die hintere Taschenwand 37 und ein Bereich des Gegenstützelements 9 stützt sich auf dem Zapfen 39 ab beziehungsweise liegt auf diesem auf, wobei die Flügel 14 des Gegenstützelements 9 gegen die oberen Begrenzungen der Hintergriffbereiche 35 gedrängt werden. Gleichzeitig liegen Seitenkanten der Flügel 14 an der Innenseite der Hintergriffbereiche 35 an. Auf diese Weise ist sowohl ein laterales und axiales Verschieben als auch - im Bereich des Stützelements 7 - ein Abheben des Abdeckblechs 5 von dem Rahmenschenkel 3 nicht möglich.

Die Flügel 14 und die Hintergriffbereiche 35 sowie der Sicherungsstift 11 und das Hintergriffgegenelement 10 bilden folglich Mittel 41 zur radial unverschieblichen Abstützung des Abdeckblechs 5 an dem Rahmenschenkel 5.

Der Sicherungsstift 11 ist mit einem Erkennungsmerkmal ausgestattet, welches einem Monteur des Wohndachfensters 1 eine zweifelsfreie Erkennung des Sicherungsstiftes 11 erlaubt. In dem hier dargestellten Beispiel ist der Sicherungsstift 11 in einer Signalfarbe gehalten. Dabei bedeutet Signalfarbe, dass sich die Farbe von Farben der umgebenden Bauteile soweit absetzt, dass eine zweifelsfreie Identifikation auch bei schlechten Sichtverhältnissen möglich ist. Zusätzlich sind in dem Betätigungsbereich 23 Querrillen vorgesehen, welche ein Ertasten des Sicherungsstiftes 11 sowie eine sichere Betätigung möglich machen.

## Patentansprüche

1. Wohndachfenster (1) mit einem Flügelrahmen (2) der Rahmenschenkel (3) aufweist, wobei an mindestens einem der Rahmenschenkel (3) ein Abdeckblech (5) mittels einer Befestigungsvorrichtung (6) befestigt ist, wobei die Befestigungsvorrichtung (6) mindestens ein Stützelement (7) und mindestens ein damit zusammenwirkendes Gegenstützelement (9) zur axial unverschieblichen Abstützung des Abdeckblechs (5) am Rahmenschenkel (3) und mindestens ein Hintergriffelement (8) sowie ein damit zusammenwirkendes Hintergriffgegenelement (10) zur Abhebeverhinderung des Abdeckblechs (5) vom Rahmenschenkel (3) aufweist, **dadurch gekennzeichnet, dass** das Hintergriffelement (8) ein für sich verschiebbar gelagerter, manuell zu bedienender Sicherungsstift (11) ist.

2. Wohndachfenster nach Anspruch 1, **dadurch gekennzeichnet, dass** die Befestigungsvorrichtung (6) Mittel (41) zur radial unverschieblichen Abstützung des Abdeckblechs (5) am Rahmenschenkel (3) aufweist.

3. Wohndachfenster nach einem der vorhergehenden Ansprüche, **dadurch gekennzeichnet, dass** dem Sicherungsstift (11) eine ihn in seiner Sicherungsstellung lösbar haltende Rastvorrichtung (30) zugeordnet ist.

4. Wohndachfenster nach einem der vorhergehenden Ansprüche, **dadurch gekennzeichnet, dass** der Sicherungsstift (11) in einem Lagerelement (19) verschieblich geführt ist.

5. Wohndachfenster nach einem der vorhergehenden Ansprüche, **dadurch gekennzeichnet, dass** der Sicherungsstift (11) an dem Lagerelement (19) mittels einer Rastverbindung (26) unverlierbar gehalten ist.

6. Wohndachfenster nach einem der vorhergehenden Ansprüche, **dadurch gekennzeichnet, dass** die Rastverbindung (26) ein Herausziehschutz ist.

7. Wohndachfenster nach einem der vorhergehenden Ansprüche, **dadurch gekennzeichnet, dass** die Rastverbindung (26) eine Rastnase (25) am Sicherungsstift (11) aufweist, die mit einer vom Sicherungsstift (11) durchsetzten Führungsöffnung (27) des Lagerelements (19) zusammenwirkt.

8. Wohndachfenster nach einem der vorhergehenden Ansprüche, **dadurch gekennzeichnet, dass** die Rastvorrichtung (30) einen Rastvorsprung (31) am Sicherungsstift (11) aufweist, der mit der Führungsöffnung (27) oder einer vom Sicherungsstift (11) durchsetzten weiteren Führungsöffnung (29) des Lagerelements (19) zusammenwirkt.

9. Wohndachfenster nach einem der vorhergehenden Ansprüche, **dadurch gekennzeichnet, dass** der Rastvorsprung (31) an einer Federbrücke (32) vorgesehen ist.

10. Wohndachfenster nach einem der vorhergehenden Ansprüche, **dadurch gekennzeichnet, dass** Rastnase (25) und Rastvorsprung (31) einstückig mit dem Sicherungsstift (11) ausgebildet sind.

11. Wohndachfenster nach einem der vorhergehenden Ansprüche, **dadurch gekennzeichnet, dass** der Sicherungsstift (11) dem Abdeckblech (5) und das Hintergriffgegenelement (10) dem Rahmenschenkel (3) zugeordnet ist.

12. Wohndachfenster nach einem der vorhergehenden Ansprüche, **dadurch gekennzeichnet, dass** das Stützelement (7) dem Abdeckblech (11) und das Gegenstützelement (9) dem Rahmenschenkel (3) zugeordnet ist.

13. Wohndachfenster nach einem der vorhergehenden Ansprüche, **dadurch gekennzeichnet, dass** das Stützelement (7) als Einfahrtasche (20) ausgebildet ist.

14. Wohndachfenster nach einem der vorhergehenden Ansprüche, **dadurch gekennzeichnet, dass** eine Taschenwand (21) der Einfahrtasche (20) zumindest bereichsweise von dem Abdeckblech (5) gebildet ist.

15. Wohndachfenster nach einem der vorhergehenden Ansprüche, **dadurch gekennzeichnet, dass** das Stützelement (7) das Gegenstützelement (9) radial unverschieblich hält.

16. Wohndachfenster nach einem der vorhergehenden Ansprüche, **dadurch gekennzeichnet, dass** das Gegenstützelement (9) mindestens einen sich im Wesentlichen parallel zu dem Abdeckblech (5) erstreckenden Flügel (14) aufweist.

17. Wohndachfenster nach einem der vorhergehenden Ansprüche, **dadurch gekennzeichnet, dass** die Einfahrtasche (20) mindestens einen Hintergriffbereich (35) aufweist, in welchen der Flügel (14) des Gegenstützelements (9) eingreift.

18. Wohndachfenster nach einem der vorhergehenden Ansprüche, **dadurch gekennzeichnet, dass** das Stützelement (7) und das Hintergriffelement (8) beabstandet zueinander angeordnet sind.

19. Verfahren zum Befestigen eines Abdeckblechs (5) an einem Rahmenschenkel (3) eines Flügelrahmens (2) eines Wohndachfensters (1), insbesondere nach einem oder mehreren der vorhergehenden Ansprüche, wobei das Abdeckblech (5) an dem Rahmenschenkel (3) mittels einer Befestigungsvorrichtung (6) befestigt wird, **dadurch gekennzeichnet, dass** ein Stützelement (7) der Befestigungsvorrichtung (6) mit einem Gegenstützelement (9) der Befestigungsvorrichtung (6) in Eingriff gebracht wird, sodass das Abdeckblech (5) axial unverschieblich an dem Rahmenschenkel (3) abgestützt ist und anschließend ein als Sicherungsstift (11) ausgebildetes Hintergriffelement (8) betätigt wird, wobei der Sicherungsstift (11) für sich verschiebbar gelagert und manuell zu bedienen ist, sodass das Hintergriffelement (8) zur Abhebeverhinderung des Abdeckblechs (5) vom Rahmenschenkel (3) mit einem Hintergriffgegenelement (10) zusammenwirkt.

## Claims

1. Residential skylight (1) with a sash frame (2) equipped with frame legs (3), wherein a cover plate (5) is attached to at least one of the frame legs (3) by means of a fastening device (6), the fastening device (6) comprising at least one support element (7) and at least one counter-support element (9) interacting with it for axially non-displaceable support of the cover plate (5) at the frame leg (3), and at least one rearengagement element (8) as well as a rear-engagement counter-element (10) interacting with it to prevent the cover plate (5) from lifting off the frame leg (3), **characterised in that** the rear-engagement element (8) is a manually operated locking pin (11) supported in such a way that it is displaceable.

2. Residential skylight according to claim 1, **characterised in that** the fastening device (6) comprises means (41) for radially non-displaceable support of the cover plate (5) at the frame leg (3).

3. Residential skylight according to any preceding claim, **characterised in that** a latching device (30) is assigned to the locking pin (11) and releasably retains it in its securing position.

4. Residential skylight according to any preceding claim, **characterised in that** the locking pin (11) is displaceably guided in a bearing element (19).

5. Residential skylight according to any preceding claim, **characterised in that** the locking pin (11) is undetachably retained at the bearing element (19) by means of a latching connection (26).

6. Residential skylight according to any preceding claim, **characterised in that** the latching connection (26) is a pull-out protection.

7. Residential skylight according to any preceding claim, **characterised in that** the latching connection (26) comprises a latching lug (25) at the locking pin (11) which interacts with a guide aperture (27) of the bearing element (19) through which the locking pin (11) passes.

8. Residential skylight according to any preceding claim, **characterised in that** the latching device (30) comprises a latching projection (31) at the locking pin (11) which interacts with the guide aperture (27) or another guide aperture (29) of the bearing element (19) through which the locking pin (11) passes.

9. Residential skylight according to any preceding claim, **characterised in that** the latching projection (31) is provided at a spring bridge (32).

10. Residential skylight according to any preceding claim, **characterised in that** the latching lug (25) and the latching projection (31) are integrally formed with the locking pin (11).

11. Residential skylight according to any preceding claim, **characterised in that** the locking pin (11) is assigned to the cover plate (5) and that the rear-engagement counter element (10) is assigned to the frame leg (3).

12. Residential skylight according to any preceding claim, **characterised in that** the support element (7) is assigned to the cover plate (11) and that the counter-support element (9) is assigned to the frame leg (3).

13. Residential skylight according to any preceding claim, **characterised in that** the support element (7) configured as insertion pocket (20).

14. Residential skylight according to any preceding claim, **characterised in that** a pocket wall (21) of the insertion pocket (20) is at least partially formed by the cover plate (5).

15. Residential skylight according to any preceding claim, **characterised in that** the support element (7) holds the counter-support element (9) in a radially non-displaceable manner.

16. Residential skylight according to any preceding claim, **characterised in that** the counter-support element (9) comprises at least one sash (14) extending substantially parallel to the cover plate (5).

17. Residential skylight according to any preceding claim, **characterised in that** the insertion pocket (20) comprises at least one rear-engagement area (35) into which the sash (14) of the counter-support element (9) engages.

18. Residential skylight according to any preceding claim, **characterised in that** the support element (7) and the rear-engagement element (8) are arranged at a distance from each other.

19. Method for fastening a cover plate (5) to a frame leg (3) of a sash frame (2) of a residential skylight (1), in particular according to one or several of the preceding claims, in which the cover plate (5) is attached to the frame leg (3) by means of a fastening device (6), **characterized in that** a support element (7) of the fastening device (6) is engaged with a counter-support element (9) of the fastening device (6) so that the cover plate (5) is supported against the frame leg (3) in an axially non-displaceable manner, and that a rear-engagement element (8) designed as a locking pin (11) is actuated next, the locking pin (11) being displaceably mounted and manually operable, so that the rear-engagement element (8) interacts with a rear-engagement counter-element (10) for preventing the cover plate (5) from lifting off the frame leg (3).

## Revendications

1. Lucarne d'habitation (1) avec un châssis d'ouvrant (2) comportant des montants de châssis (3), une tôle de recouvrement (5) étant fixée à l'aide d'un dispositif de fixation (6) à au moins un des montants de châssis (3), le dispositif de fixation (6) présentant au moins un élément de support (7) et au moins un élément de contresupport (9) qui coopère avec ledit élément de support (7) pour assurer le support axial non coulissant de la tôle de recouvrement (5) au montant de châssis (3) et au moins un élément à prise arrière (8) ainsi qu'un contre-élément à prise arrière (10) qui coopère avec ledit élément à prise arrière (8) pour empêcher la tôle de recouvrement (5) de se soulever du montant de châssis (3), **caractérisée en ce, que** l'élément à prise arrière (8) soit une goupille de sûreté (11) à actionner manuellement, montée de manière coulissante.

2. Lucarne d'habitation selon la revendication 1, **caractérisée en ce, que** le dispositif de fixation (6) présente des moyens (41) pour assurer le support radial non coulissant de la tôle de recouvrement (5) au montant de châssis (3).

3. Lucarne d'habitation selon l'une des revendications précédentes, **caractérisée en ce, que** soit affecté à la goupille de sûreté (11) un dispositif de crantage (30) qui maintient ladite goupille de sûreté (11) de manière déblocable en position de sûreté.

4. Lucarne d'habitation selon l'une des revendications précédentes, **caractérisée en ce, que** la goupille de sûreté (11) soit guidée de manière coulissante dans un élément de support (19).

5. Lucarne d'habitation selon l'une des revendications précédentes, **caractérisée en ce, que** la goupille de sûreté (11) soit maintenue de manière imperdable à l'élément de support (19) à l'aide d'une liaison à crantage (26).

6. Lucarne d'habitation selon l'une des revendications précédentes, **caractérisée en ce, que** la liaison à crantage (26) soit une protection anti-retrait.

7. Lucarne d'habitation selon l'une des revendications précédentes, **caractérisée en ce, que** la liaison à crantage (26) présente à la goupille de sûreté (11) un taquet d'arrêt (25), qui coopère avec un orifice de guidage (27) de l'élément de support (19), ledit orifice de guidage (27) étant traversé par la goupille de sûreté (11).

8. Lucarne d'habitation selon l'une des revendications précédentes, **caractérisée en ce, que** le dispositif de crantage (30) présente à la goupille de sûreté (11) une saillie de crantage (31), qui coopère avec l'orifice de guidage (27) ou avec un autre orifice de guidage (29) de l'élément de support (19), ledit orifice de guidage (29) étant traversé par la goupille de sûreté (11).

9. Lucarne d'habitation selon l'une des revendications précédentes, **caractérisée en ce, que** la saillie de crantage (31) soit prévue à un pont élastique (32).

10. Lucarne d'habitation selon l'une des revendications précédentes, **caractérisée en ce, que** le taquet d'arrêt (25) et la saillie de crantage (31) soit formés d'un seul tenant avec la goupille de sûreté (11).

11. Lucarne d'habitation selon l'une des revendications précédentes, **caractérisée en ce, que** la goupille de sûreté (11) soit affectée à la tôle de recouvrement (5) et que le contre-élément à prise arrière (10) soit affecté au montant de châssis (3).

12. Lucarne d'habitation selon l'une des revendications précédentes, **caractérisée en ce, que** l'élément de support (7) soit affecté à la tôle de recouvrement (11) et que l'élément de contresupport (9) soit affecté au montant de châssis (3).

13. Lucarne d'habitation selon l'une des revendications précédentes, **caractérisée en ce, que** l'élément de support (7) soit formé en tant que poche d'engagement (20).

14. Lucarne d'habitation selon l'une des revendications précédentes, **caractérisée en ce, qu'**une paroi de poche (21) de la poche d'engagement (20) soit formée au moins partiellement par la tôle de recouvrement (5).

15. Lucarne d'habitation selon l'une des revendications précédentes, **caractérisée en ce, que** l'élément de support (7) maintienne radialement de manière non coulissante l'élément de contresupport (9).

16. Lucarne d'habitation selon l'une des revendications précédentes, **caractérisée en ce, que** l'élément de contresupport (9) présente au moins une aile (14) qui s'étend essentiellement de manière parallèle par rapport à la tôle de recouvrement (5).

17. Lucarne d'habitation selon l'une des revendications précédentes, **caractérisée en ce, que** la poche d'engagement (20) présente au moins une partie à prise arrière (35), dans laquelle s'engage l'aile (14) de l'élément de contresupport (9).

18. Lucarne d'habitation selon l'une des revendications précédentes, **caractérisée en ce, que** l'élément de support (7) et l'élément à prise arrière (8) soient agencés de manière espacée entre eux.

19. Procédé pour la fixation d'une tôle de recouvrement (5) à un montant de châssis (3) d'un châssis d'ouvrant (2) d'une lucarne d'habitation (1), en particulier selon l'une ou plusieurs des revendications précédentes, la tôle de recouvrement (5) étant fixée au montant de châssis (3) à l'aide d'un dispositif de fixation (6), **caractérisé en ce, qu'**un élément de support (7) du dispositif de fixation (6) entre en prise avec un élément de contresupport (9) du dispositif de fixation (6), de sorte que la tôle de recouvrement (5) soit soutenue au montant de châssis (3) de manière non coulissante sur le plan axial et que soit ensuite actionné un élément à prise arrière (8) formé en tant que goupille de sûreté (11), qui est montée de manière coulissante et qui est destinée à être actionnée manuellement, de sorte que l'élément à prise arrière (8) coopère avec un contre-élément à prise arrière (10) pour empêcher la tôle de recouvrement (5) de se soulever du montant de châssis (3).
